# EUROPÄISCHE PATENTSCHRIFT

(11) **EP 1 535 796 B1**
(45) Veröffentlichungstag und Bekanntmachung des Hinweises auf die Patenterteilung: **05.12.2007**
(21) Anmeldenummer: 04023969.1
(22) Anmeldetag: 07.10.2004
(51) Int. Cl.: B60P 3/36

(54) **Multifunktionssäule sowie Strassenfahrzeug wie ein Reisemobil, Wohnwagen oder dgl., in welchem die Multifunktionssäule angeordnet ist**
Multifunctional column for use in campers and caravans
Colonne multifonctionelle pour utilisation dans des camping-cars ou des caravanes

(30) Priorität: 25.11.2003 DE 20318191 U
(43) Veröffentlichungstag der Anmeldung: 01.06.2005
(73) Patentinhaber: Knaus Tabbert Group GmbH, 94118 Jandelsbrunn (DE)
(72) Erfinder: Dickenberger, Thomas, 36041 Künzell (DE)
(74) Vertreter: Kuhnen & Wacker

(56) Entgegenhaltungen:
- DE-A1- 2 904 113
- DE-U1- 9 203 301
- US-A- 4 236 749

## Beschreibung

Die Erfindung betrifft ein Straßenfahrzeug wie ein Reisemobil, Wohnwagen oder dgl. nach dem Oberbegriff des Anspruches 1.

Wohnwägen oder Reisemobile erfreuen sich bei Menschen, die gerne ungebunden Urlaub machen, großer Beliebtheit. Hierzu sind diese Straßenfahrzeuge mit allen für das tägliche Leben erforderlichen Einrichtungen ausgestattet, welche, um die Gesamtdimensionen des Fahrzeugs im Rahmen zu halten, in einer kompakten Anordnung im Wohnraum vorgesehen sind. Da die Einrichtungen im Wohnraum zudem insbesondere während der Fahrt des Straßenfahrzeugs dynamischen Belastungen unterliegen, sind sie in der Regel fest installiert. Dies bedingt jedoch, daß beispielsweise ein Fernseher, eine Bar, etc. genau einem bestimmten Teilbereich des Wohnraums zugeordnet sind, so daß deren Nutzung räumlichen Beschränkungen unterliegt.

Aus der DE 92 03 301 U1 ist ein Wohn- oder Büroraum mit einem Raumteiler bekannt geworden, welcher an einem Straßenfahrzeug wie z.B. einem Campingbus realisiert werden kann. Dieses Fahrzeug weist im Grundriß mehrere separate Räume auf, wobei eine Multifunktionssäule zwischen zwei Räumen angeordnet ist und sich hierbei zur Unterteilung dieser Räume über die gesamte Breite des Fahrzeuginnenraumes erstreckt. Die Multifunktionssäule weist ein Sockelteil und eine Dreheinheit auf, wobei die Dreheinheit gegenüber dem Sockelteil drehbar gelagert ist und hierbei eine Drehbereichsebene definiert. Die Dreheinheit weist ferner einen Raumteiler auf, der die Drehbereichsebene in Abschnitte unterteilt, wobei jedem Abschnitt eine funktionelle Einheit zugeordnet ist. Die vorliegende Erfindung geht von diesem Stand der Technik aus.

Der Erfindung liegt daher die Aufgabe zugrunde, ein Straßenfahrzeug wie ein Reisemobil, Wohnwagen oder dgl. derart weiterzubilden, daß bestimmte Einrichtungsgegenstände von mehreren Wohnraumbereichen aus zugänglich sind und dabei eine besonders kompakte Anordnung erzielt wird.

Diese Aufgabe wird durch ein Straßenfahrzeug mit den Merkmalen des Anspruches 1 gelöst.

Die Erfindung stellt somit ein Straßenfahrzeug mit einer Multifunktionssäule zur Verfügung. Die Multifunktionssäule enthält dabei ein Sockelteil, eine Dreheinheit und ein Kopfteil, wobei die Dreheinheit gegenüber dem Sockelteil und dem Kopfteil drehbar gelagert ist und hierbei eine Drehbereichsebene definiert, wobei die Dreheinheit einen Raumteiler aufweist, der die Drehbereichsebene in wenigstens zwei Kreisausschnitte unterteilt, und wobei jedem Abschnitt eine funktionelle Einheit, wie beispielsweise eine Bar, ein TV-System, ein Computersystem oder dgl., zugeordnet ist.

Durch diese Multifunktionssäule ist es erstmals möglich, mehrere funktionelle Einheiten sozusagen Rücken an Rücken zueinander anzuordnen und gezielt der Seite zuzudrehen, an der sie gerade gewünscht sind. Die Flexibilität im Umgang mit diesen funktionellen Einheiten erhöht sich hierdurch wesentlich, was den Nutzungskomfort des Wohnwagens, Reisemobils etc. deutlich steigert. Zudem kann hiermit eine besonders kompakte Anordnung erzielt werden. Der üblicherweise knapp bemessene Freiraum in dem Wohnmobil etc. kann so besonders effektiv genutzt werden, wobei es andererseits zudem möglich ist, eine größere Anzahl an funktionellen Einheiten im Straßenfahrzeug anzuordnen.

Das Straßenfahrzeug profitiert somit ganz erheblich von den Vorteilen der Multifunktionssäule und bietet insgesamt bei optimierter Raumausnutzung einen verbesserten Nutzungskomfort.

Ferner weist das Straßenfahrzeug im Grundriß mehrere separate Räume auf, wobei die Multifunktionssäule in einer Trennwand zwischen zwei Räumen integriert ist. Dann kann die Multifunktionssäule als eine Art Raumteiler innerhalb des Straßenfahrzeugs dienen, wobei die funktionellen Einheiten an der Dreheinheit dann von unterschiedlichen Räumen zugänglich sind. Diese können daher gleichzeitig und unabhängig voneinander genutzt werden. Darüber hinaus kann ein Bediener somit frei wählen, ob er nun vom Aufenthaltsraum oder vom Schlafraum aus die Bar, einen Fernseher oder dgl. nutzt. Hierdurch erhöht sich der Nutzungskomfort für das erfindungsgemäße Straßenfahrzeug nochmals.

Vorteilhafte Weiterbildungen des erfindungsgemäßen Straßenfahrzeugs sind Gegenstand der abhängigen Ansprüche 2 bis 4.

So können im Sockelteil und/oder im Kopfteil Versorgungseinrichtungen, insbesondere Stromversorgungseinrichtungen, angeordnet sein. Hierdurch läßt sich eine besonders kompakte Anordnung erzielen, wobei es zudem möglich ist, Versorgungsleitungen wie Stromkabel, Antennenkabel etc. beispielsweise durch den Raumteiler direkt der jeweiligen funktionellen Einheit zuzuführen, so daß außen vorliegende Kabel etc. vermieden werden können.

Darüber hinaus ist es auch möglich, daß im Sockelteil und/oder im Kopfteil eine Verteilereinrichtung für eine Klimaanlage angeordnet ist. Damit läßt sich ein hoher Wirkungsgrad für die Klimaanlage erzielen, da im Hinblick auf diese Teile der Multifunktionssäule große Gestaltungsfreiheiten gegeben sind und bei der in der Regel vorgesehenen kreisförmigen Umfangsgestalt dieser Teile eine besonders gute Verteilung der klimatisierten Luft im Raum bzw. in den Räumen des Reisemobils etc. möglich ist.

Von weiterem Vorteil ist es, wenn der Raumteiler in vorbestimmten Drehlagepositionen arretierbar ist. Dann kann ein unbeabsichtigtes Verdrehen dieser Einheit vermieden werden, was insbesondere während der Fahrt des Reisemobils etc. von Vorteil ist, um undefinierte Bewegungszustände der Dreheinheit zu vermeiden.

Die Erfindung wird nachfolgend in Ausführungsbeispielen anhand der Figuren der Zeichnung näher erläutert. Es zeigt:
- Fig. 1: in schematischer Darstellung einen leicht perspektivisch gehaltenen Grundriß eines Wohnwagens, der erfindungsgemäß ausgestaltet ist;
- Fig. 2: einen Schnitt durch den Wohnwagen gemäß Fig. 1 entlang der dort angegebenen Linie A-A mit der erfindungsgemäßen Multifunktionssäule in einer ersten Stellung; und
- Fig. 3: eine Darstellung ähnlich der in Fig. 2 mit der Multifunktionssäule in einer zweiten Stellung, in der die Dreheinheit um 180° gedreht ist.

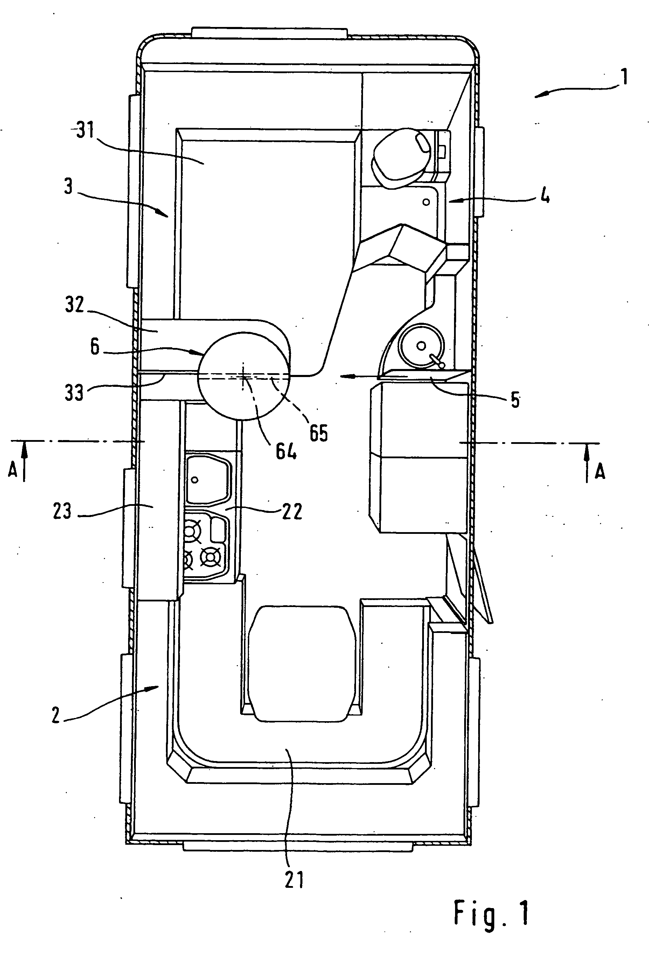

Gemäß der Darstellung in Fig. 1 weist ein Wohnwagen 1 einen Aufenthaltsraum 2, einen Schlafraum 3 und eine Sanitärzelle 4 auf. Der Aufenthaltsraum 2 und der Schlafraum 3 sind dabei durch eine Schiebetür 5 gegeneinander abteilbar. Darüber hinaus enthält der Wohnwagen eine Multifunktionssäule 6, welche im Wandbereich zwischen dem Aufenthaltsraum 2 und dem Schlafraum 3 angeordnet ist.

Im Aufenthaltsraum 2 ist unter anderem eine Sitzecke 21, eine Küchenzeile 22 und ein Oberkasten 23 angeordnet.

Im Schlafraum 3 befindet sich ein Bett 31, an welche sich eine Ablage 32 in Richtung zu einer Schlafraumwand 33 anschließt. Die Schlafraumwand 33 stellt dabei die feste Trennwand zwischen dem Schlafraum 3 und dem Aufenthaltsraum 2 dar.

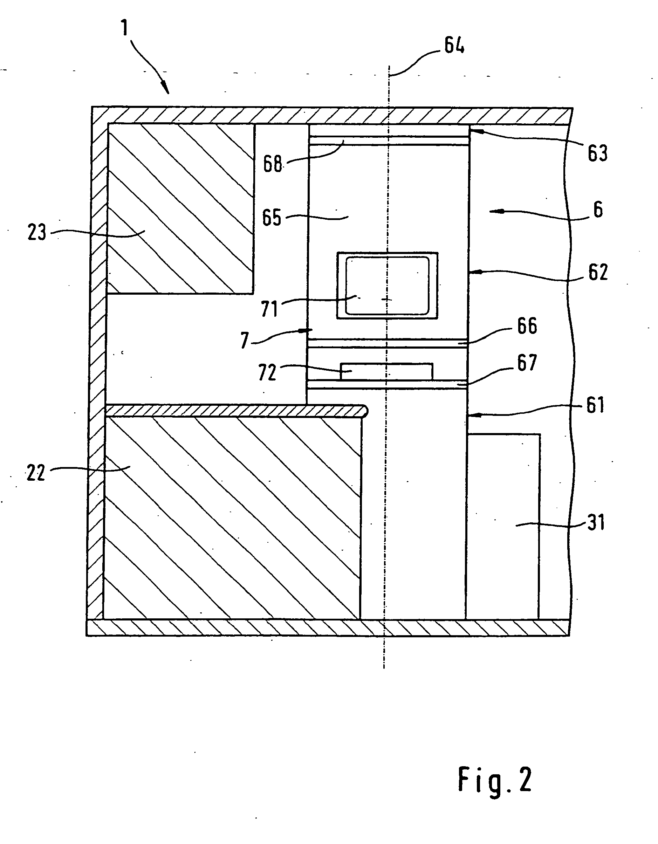

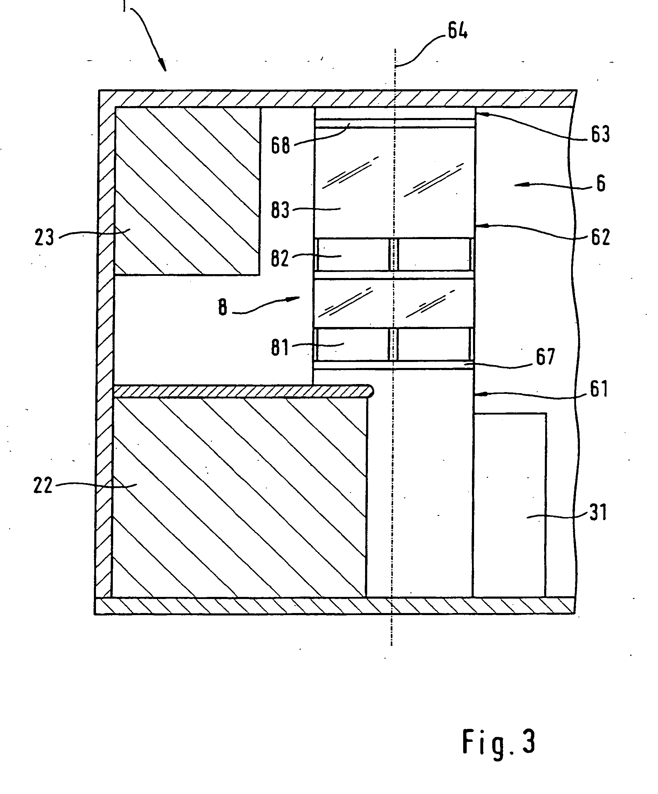

Wie aus den Figuren ersichtlich ist, weist die Multifunktionssäule 6 eine kreisförmige Querschnittsgestalt auf, und ragt sowohl in den Aufenthaltsraum 2 als auch in den Schlafraum 3 hinein. Aus den Fig. 2 und 3 ist dabei erkennbar, daß die Multifunktionssäule 6 in Axialrichtung im wesentlichen in drei Teile gegliedert ist: bodenseitig enthält die Multifunktionssäule 6 ein feststehendes Sockelteil 61, auf welchem eine Dreheinheit 62 aufsitzt, und über welcher wiederum deckenseitig ein feststehendes Kopfteil 63 vorliegt.

Die Dreheinheit 62 ist dabei um eine Drehachse 64 gegenüber dem Sockelteil 61 und dem Kopfteil 63 verdrehbar, wobei die Drehachse 64 mit der Hauptachse der Multifunktionssäule 6 zusammenfällt.

Wie aus einer Zusammenschau der Fig. 2 und 3, welche die Dreheinheit 62 jeweils um 180° zueinander verdreht zeigen, deutlich wird, enthält die Dreheinheit 62 einen Raumteiler 65, der die Drehbereichsebene in zwei gleiche Abschnitte unterteilt, welche jeweils im wesentlichen halbkreisförmige Kreisausschnitte sind. Der Raumteiler 65 verläuft somit durch die Drehachse 64 und stellt eine Trennwand zwischen den beidseitig vorliegenden Abschnitten der Drehbereichsebene dar.

Gemäß der Darstellung in Fig. 2 ist auf einer Seite des Raumteilers 65 ein TV-System 7 mit einem Flachbildschirm 71 angeordnet, der im Raumteiler 65 integriert ist. Darüber hinaus weist die Dreheinheit 62 auf dieser Seite eine Zwischenplatte 66 auf, wobei diese zusammen mit einer Grundplatte 67 einen Zwischenraum definiert, in welchem eine Empfangseinheit 72 des TV-Systems 7 angeordnet ist. In der in Fig. 2 gezeigten Stellung der Multifunktionssäule 6 ist das TV-System 7 somit vom Aufenthaltsraum 2 aus nutzbar.

In Fig. 3 ist eine zweite Stellung der Dreheinheit 62 der Multifunktionssäule 6 gezeigt, welche gegenüber der ersten Stellung um 180° verdreht ist. In dieser zweiten Stellung ist dem Aufenthaltsraum 2 eine Bar 8 zugewandt, welche ein unteres Regal 81 und ein oberes Regal 82 enthält, in denen Flaschen, Gläser etc. abgestellt sein können. Auf der der Bar 8 zugewandten Seite des Raumteilers 65 ist ferner ein Spiegel 83 angeordnet. In der in Fig. 3 gezeigten Stellung ist die Bar 8 somit vom Aufenthaltsraum 2 aus zugänglich. Das TV-System 7 ist dagegen gleichzeitig vom Schlafraum 3 aus nutzbar.

Somit können beide funktionelle Einheiten, das TV-System 7 und die Bar 8, je nach Stellung der Dreheinheit 62 vom jeweiligen Wohnbereich aus genutzt werden. Die Ablage 32 im Schlafraum 3 befindet sich hierzu nur wenig über dem Niveau der Oberkante des Betts 31 und jedenfalls unterhalb der Unterkante der Dreheinheit 62, so daß die Dreheinheit 62 auch auf Seiten des Schlafraums 3 frei zugänglich und komfortabel nutzbar ist.

Die Erfindung läßt neben der erläuterten Ausführungsform weitere Gestaltungsansätze zu.

So können an der Dreheinheit 62 der Multifunktionssäule 6 auch andere funktionelle Einheiten als das TV-System 7 bzw. die Bar 8 angeordnet sein. Beispielsweise ist es auch möglich, ein Computersystem mit einem Flachbildschirm vorzusehen, wobei dann im Zwischenraum zwischen der Zwischenplatte 66 und der Grundplatte 67 beispielsweise eine Tastatur vorliegen kann.

Ferner ist es auch möglich, daß der Raumteiler 65 die Drehbereichsebene in ungleiche Abschnitte unterteilt, sofern dies aus funktionellen Gründen für die funktionellen Einheiten gewünscht sein sollte. Ein Abschluß zwischen dem Aufenthaltsraum 2 und dem Schlafraum 3 kann dann auch durch umfangsseitig an der Dreheinheit 62 oder am benachbarten Wandbereich angeordnete zylinderförmige Verkleidungsabschnitte hergestellt werden. Überdies kann der Raumteiler auch geneigt zur Drehachse 64 in der Dreheinheit angeordnet sein, sofern die vorgesehenen funktionellen Einheiten eine entsprechende Anpassung erfordern. Auf diese Weise kann z.B. ein Bildschirm auch geneigt in der Dreheinheit zu liegen kommen.

Darüber hinaus ist es auch möglich, daß der Raumteiler 65 die Drehbereichsebene in mehr als zwei Abschnitte unterteilt. So kann es in bestimmten Anwendungsfällen, insbesondere wenn die Multifunktionssäule 6 nicht in einer Zwischenwand integriert ist, sondern beispielsweise zentral in einem Raum angeordnet wird, sinnvoller sein, in der Dreheinheit 62 drei oder mehr funktionelle Einheiten unterzubringen, die dann frei von der jeweiligen Seite aus zugänglich sind bzw. die ein Benutzer dann frei zu sich hindrehen kann.

Ferner ist es auch möglich, daß der Raumteiler 65 so gegenüber der Ebene der Schlafraumwand 33 verdreht wird, daß eine Durchreiche zwischen dem Aufenthaltsraum 2 und dem Schlafraum 3 gegeben ist.

Dabei kann die Dreheinheit 62 bzw. der Raumteiler 65 in vorbestimmten Drehlagepositionen arretierbar sein. Dies kann beispielsweise über federvorgespannte Arretierelemente erfolgen, deren Arretierwirkung bei einer vorbestimmten Drehkraft manuell überwunden werden kann.

Darüber hinaus ist es auch möglich, im Kopfteil und/oder im Sockelteil Versorgungseinrichtungen oder auch eine Verteilereinrichtung für eine Klimaanlage anzuordnen. In letzterem Falle können beispielsweise umfangsseitig am Kopfteil mehrere radial nach außen gerichtete Öffnungen vorgesehen sein, durch welche klimatisierte Luft sowohl in den Aufenthaltsraum 2 als auch in den Schlafraum 3 oder auch wahlweise nur in einen dieser Räume abgegeben wird. Alternativ oder ergänzend ist es auch möglich, die klimatisierte Luft durch entsprechende Öffnungen im Sockelteil abzugeben.

Hierbei müssen das Kopfteil 61 und das Sockelteil 63 keinen kreisförmigen Querschnitt, d.h. keine zylinderförmige Umfangsfläche aufweisen; statt dessen können diese Teile auch eine vieleckige Umfangsgestalt haben und/oder mit Übergängen zu den benachbarten Wandbereichen versehen sein. In solchen Fällen beschreibt dann lediglich die Drehbewegung des Raumteilers 65 um die Drehachse 64 eine kreisförmige Umfangsbahn, welche der Multifunktionssäule 6 die säulenartige Gestalt verleiht.

Den oberen Abschluß der Dreheinheit 62 bildet eine Deckplatte 68, in welche z.B. Lichtquellen etc. integriert sein können, welche durch das Kopfteil 63 hindurch mit Strom versorgbar sind. Damit ist eine gezielte Beleuchtung beispielsweise der Bar 8 in ästhetisch anspruchsvoller Weise möglich.

## Patentansprüche

1. Straßenfahrzeug wie ein Reisemobil, Wohnwagen (1) oder dgl., welches im Grundriß mehrere separate Räume (2, 3, 4) aufweist, wobei eine Multifunktionssäule (6) im Wandbereich zwischen zwei Räumen (2, 3) angeordnet ist und ein Sockelteil (61) und eine Dreheinheit (62) aufweist, wobei die Dreheinheit (62) gegenüber dem Sockelteil (61) drehbar gelagert ist und hierbei eine Drehbereichsebene definiert, wobei die Dreheinheit (62) einen Raumteiler (65) aufweist, der die Drehbereichsebene in Abschnitte unterteilt, und wobei jedem Abschnitt eine funktionelle Einheit, wie beispielsweise eine Bar (8), ein TV-System (7), ein Computersystem oder dgl., zugeordnet ist,
**dadurch gekennzeichnet,**
**daß** die Multifunktionssäule (6) ferner ein Kopfteil (63) aufweist, wobei die Dreheinheit (62) gegenüber dem Kopfteil (63) drehbar gelagert ist,
**daß** die Multifunktionssäule (6) in einer Trennwand zwischen zwei Räumen (2, 3) integriert und das Sockelteil (61) bodenseitig feststehend ist, und
**daß** der Raumteiler (65) die Drehbereichsebene in wenigstens zwei Kreisausschnitte unterteilt.

2. Straßenfahrzeug nach Anspruch 1, **dadurch gekennzeichnet, daß** Versorgungseinrichtungen, insbesondere Stromversorgungseinrichtungen, im Sockelteil (61) und/oder im Kopfteil (63) angeordnet sind.

3. Straßenfahrzeug nach Anspruch 1 oder 2, **dadurch gekennzeichnet, daß** im Sockelteil (61) und/oder im Kopfteil (63) eine Verteilereinrichtung für eine Klimaanlage angeordnet ist.

4. Straßenfahrzeug nach einem der Ansprüche 1 bis 3, **dadurch gekennzeichnet, daß** der Raumteiler (65) in vorbestimmten Drehlagepositionen arretierbar ist.

## Claims

1. Road vehicle such as a campervan, caravan (1) or the like, which has several separate rooms (2, 3, 4) in the basic plan, wherein a multifunction column (6) is arranged in the wall region between two rooms (2, 3) and has a base part (61) and a rotating unit (62), wherein the rotating unit (62) is mounted to be rotatable relative to the base part (61) and thus defines a plane of the rotation range, wherein the rotating unit (62) has a room divider (65), which divides the plane of the rotation range into sections, and wherein each section has an associated functional unit such as, for example, a bar (8), a TV system (7), a computer system or the like,
**characterised in that**
the multifunction column (6) additionally has a head part (63), wherein the rotation unit (62) is mounted to be rotatable relative to the head part (63),
that the multifunction column (6) is integrated into a dividing wall between two rooms (2, 3) and the base part (61) is fixed on the floor side, and
that the room divider (65) divides the plane of the rotation range into at least two circular sections.

2. Road vehicle according to Claim 1, **characterised in that** supply systems, in particular power supply systems, are arranged in the base part (61) and/or in the head part (63).

3. Road vehicle according to Claim 1 or 2, **characterised in that** a distributor system for an air-conditioning unit is arranged in the base part (61) and/or in the head part (63).

4. Road vehicle according to one of Claims 1 to 3, **characterised in that** the room divider (65) can be locked in predetermined positions of rotation.

## Revendications

1. - Véhicule routier tel qu'un camping-car, une caravane (1) ou similaires, qui présente, dans le plan horizontal, plusieurs espaces séparés (2, 3, 4), une colonne multifonctionnelle (6) étant disposée dans la zone de paroi entre deux espaces (2, 3), et présentant une partie de socle (61) et une unité tournante (62), l'unité tournante (62) étant montée à rotation par rapport à la partie de socle (61) et définissant à cette occasion un plan de zone de rotation, l'unité tournante (62) présentant un séparateur (65) qui divise le plan de zone de rotation en sections, et à chaque section étant associée une unité fonctionnelle, comme, par exemple, un bar (8), un système de télévision (7), un système d'ordinateur ou similaires,
**caractérisé par le fait**
**que** la colonne multifonctionnelle (6) présente en outre une partie de tête (63), l'unité tournante (62) étant montée à rotation par rapport à la partie de tête (63) ;
**que** la colonne multifonctionnelle (6) est intégrée dans une cloison entre deux espaces (2, 3) et que la partie de socle (61) est fixe à partir du sol ; et
**que** le séparateur (65) divise le plan de zone de rotation en au moins deux secteurs circulaires.

2. - Véhicule routier selon la revendication 1, **caractérisé par le fait que** des installations d'alimentation, en particulier des installations d'alimentation en courant, sont disposées dans la partie de socle (61) et/ou dans la partie de tête (63).

3. - Véhicule routier selon l'une des revendications 1 ou 2, **caractérisé par le fait que**, dans la partie de socle (61) et/ou dans la partie de tête (63) est disposé un dispositif répartiteur pour une installation de conditionnement d'air.

4. - Véhicule routier selon l'une des revendications 1 à 3, **caractérisé par le fait que** le séparateur (65) est capable d'être arrêté dans des positions d'état de rotation prédéfinies.
